# FASCICULE DE BREVET EUROPEEN

(11) **EP 3 126 176 B1**
(45) Date de publication et mention de la délivrance du brevet: **19.06.2019**
(21) Numéro de dépôt: 15713900.7
(22) Date de dépôt: 02.04.2015
(51) Int. Cl.: B60K 17/356, B60K 23/08, F16H 61/4043

(54) **SYSTEME D'ASSISTANCE HYDRAULIQUE POUR VEHICULE**
HYDRAULISCHES BOOSTSYSTEM FÜR EIN FAHRZEUG
HYDRAULIC BOOST SYSTEM FOR VEHICLE

(30) Priorité: 02.04.2014 FR 1452932
(43) Date de publication de la demande: 08.02.2017
(73) Titulaire: Poclain Hydraulics Industrie, 60410 Verberie (FR)
(72) Inventeur: LAMBEY, Julien, F-60410 Verberie (FR); BOSIC, Ante, F-60410 Verberie (FR)
(74) Mandataire: Regimbeau
(86) Numéro de dépôt international: PCT/EP2015/057426
(87) Numéro de publication internationale: WO 2015/150570

(56) Documents cités:
- EP-A2- 0 227 547
- DE-A1- 19 648 706
- JP-A- S60 139 533
- US-A- 3 913 697
- US-A1- 2010 097 040

## Description

### DOMAINE TECHNIQUE GENERAL

La présente invention concerne le domaine des circuits hydrauliques d'assistance utilisés notamment pour des véhicules.

### ETAT DE L'ART

On connait les systèmes d'assistance hydraulique pour véhicules, pouvant être engagés sélectivement en fonction des conditions d'utilisation du véhicule ou sur commande de l'utilisateur.

De tels systèmes viennent ainsi complémenter une transmission principale du véhicule, communément mécanique, électrique ou encore hydrostatique à grande vitesse.

Dans l'ensemble du présent texte, on désignera par appareil hydraulique un appareil pouvant fonctionner en tant que moteur ou en tant que pompe hydraulique. Un appareil hydraulique comprend de manière conventionnelle une pluralité de pistons disposés dans des logements, et effectuant des mouvements de va et vient au contact d'une came multilobes dans le cas d'un appareil hydraulique à pistons radiaux.

Une structure particulière d'un système d'assistance hydraulique est présentée dans la demande de brevet 12 59191 déposée le 28 septembre 2012 au nom de la Demanderesse (FR 2 996 176 A, publié après la date de priorité de cette demande) ainsi que dans EP 2 559 581 A.

Cette structure consiste à monter un premier appareil hydraulique que l'on qualifie de menant sur un arbre du véhicule entrainé en rotation par la transmission principale du véhicule, et un ou plusieurs appareils hydrauliques que l'on qualifie de menés, sur un ou des autres arbres du véhicule, non entrainé par la transmission principale, les appareils hydrauliques menant et menés étant reliés par un circuit hydraulique.

L'appareil hydraulique menant est typiquement couplé à un essieu menant du véhicule, tandis que l'appareil hydraulique mené est typiquement couplé à un essieu mené dudit véhicule.

Lorsque l'assistance hydraulique est mise en service, l'appareil hydraulique menant est entraîné par l'essieu menant et fonctionne donc en tant que pompe hydraulique, pour délivrer un débit qui alimente l'appareil hydraulique mené qui fonctionne alors en tant que moteur hydraulique, et entraîne ainsi l'essieu mené.

De cette manière, le couple prélevé sur l'essieu menant est transmis à l'essieu mené via les appareils hydrauliques menant et mené. Cela est particulièrement avantageux, notamment en cas de patinage des roues du véhicule.

Les appareils hydrauliques menant et mené sont à cylindrée fixe, et souvent, ils sont de même cylindrée, aux fuites près. Les appareils hydrauliques menant et mené imposent ainsi respectivement à l'essieu menant et à l'essieu mené une même vitesse de rotation. Le ratio de vitesses entre l'appareil menant et l'appareil mené est fixe, il n'est donc pas possible de le modifier.

Or, en cas de virage du véhicule, les roues reliées à l'essieu menant et celles reliées à l'essieu mené ne parcourent pas la même distance. L'appareil hydraulique mené est alors suralimenté par l'appareil hydraulique menant, un couple trop important est transmis à l'essieu mené, et la pression de l'huile dans le circuit hydraulique augmente trop rapidement.

On connait différents documents qui proposent de réguler les surpressions dans différents circuits, notamment le document US 3 913 967 A, selon le préambule de la revendication 1, qui vise à éviter les chocs et non pas à résoudre les problèmes liés à la surpression dans un virage.

### PRESENTATION DE L'INVENTION

L'invention vise à proposer un véhicule comprenant un système ne présentant pas cette problématique.

Plus précisément, la présente invention a pour objet un véhicule tel que défini dans la revendication 1. Les revendications dépendantes décrivent des variantes.

L'invention a également pour objet un procédé d'assistance hydraulique d'un véhicule, le procédé étant tel que défini en revendication 14.

### PRESENTATION DES FIGURES

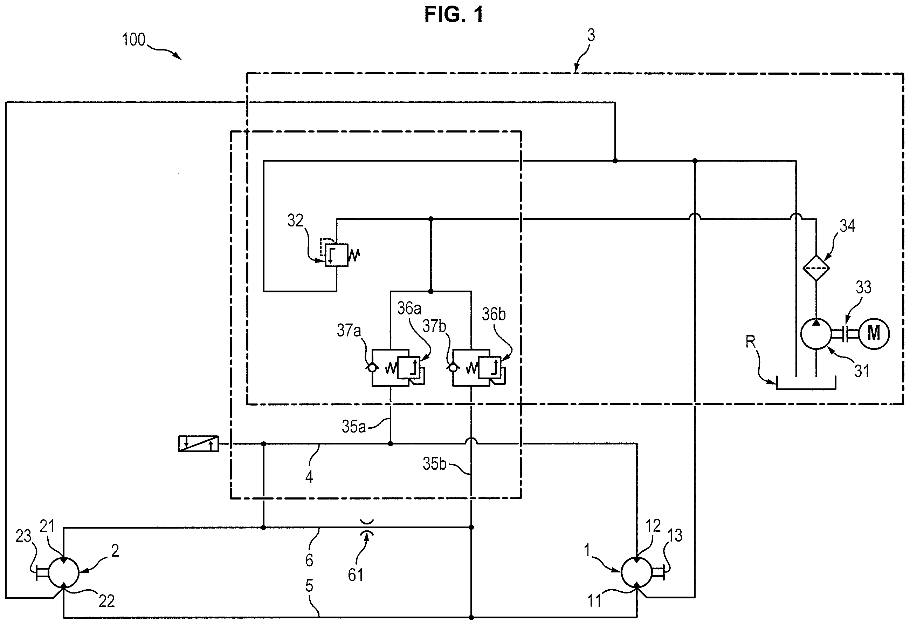

D'autres caractéristiques, buts et avantages de l'invention ressortiront de la description qui suit, qui est purement illustrative et non limitative, et qui doit être lue en regard des dessins annexés, sur lesquels les figures 1 à 8 présentent un système selon différents modes de réalisation de l'invention.

Sur l'ensemble des figures, les éléments communs sont repérés par des références numériques identiques.

### DESCRIPTION DETAILLEE

Les figures 1 à 8 illustrent un système 100 selon différents modes de réalisation de l'invention.

Le système 100 comprenant un appareil hydraulique menant 1 et un appareil hydraulique mené 2. Les appareils hydrauliques menant 1 et mené 2 sont à pistons radiaux et came multilobes. Les appareils hydrauliques menant 1 et mené 2 sont de préférence du type débrayable. Pour cela, les appareils hydrauliques menant 1 et mené sont par exemple à pistons radiaux rétractables. Les appareils menant 1 et mené 2 peuvent également être débrayables par débrayage du bloc cylindre et de l'arbre. Les appareils hydrauliques menant 1 et mené 2 sont à cylindrée fixe.

Afin d'illustrer le fonctionnement du système, on repère pour chacun de ces appareils hydrauliques son admission et son refoulement, respectivement l'admission 11 et le refoulement 12 de l'appareil hydraulique menant 1, et l'admission 21 et le refoulement 22 de l'appareil hydraulique mené 2.
Le refoulement 12 de l'appareil hydraulique menant 1 est relié à l'admission 21 de l'appareil hydraulique mené 2 par une ligne d'alimentation 4, et le refoulement 22 de l'appareil hydraulique mené 2 étant relié à l'admission 11 de l'appareil hydraulique menant 1 par une ligne de retour 5. Les lignes d'alimentation 4 et de retour 5 changent de rôle selon le sens de marche du véhicule avant/arrière.

Les appareils hydrauliques 1 et 2 sont chacun associé à un arbre tournant, respectivement 13 et 23. Les arbres tournants 13 et 23 sont typiquement un essieu menant 13 et un essieu mené 23 d'un véhicule. Les appareils hydrauliques menant 1 et mené 2 sont configurés pour tourner respectivement à la vitesse de rotation des roues associées à l'essieu menant 13 et à l'essieu mené 23. Dans le cas d'un essieu avec différentiel, les appareils hydrauliques menant 1 et mené 2 sont configurés pour tourner à la vitesse moyenne de rotation des roues associées à chacun des essieux 13 et 23.

Le système 100 comprend en outre un moteur primaire M. Le moteur M est typiquement un moteur thermique ou électrique.

Le moteur primaire M est couplé à une source de gavage 3 via un embrayage 33, permettant l'engagement ou le désengagement de cette source de gavage 3 avec le moteur primaire M.

Le moteur primaire M est par exemple relié à une transmission principale du véhicule permettant l'entrainement de ses roues, les différentes structures de transmission principale et de roues étant bien connues de l'homme du métier et n'étant pas représentées sur les figures.

Selon une variante, le moteur primaire M est un moteur indépendant par rapport à la transmission principale du véhicule ou de l'engin considéré. Le moteur primaire M et la source de gavage 3 peuvent alors par exemple former un groupe électropompe dans lequel l'embrayage 33 peut être supprimé.

La source de gavage 3 comprend une pompe de gavage 31, un limiteur de pression 32, et un filtre 34.

La source de gavage 3 prélève de l'huile dans un réservoir R, typiquement à pression ambiante.

La source de gavage 3 est reliée à la ligne d'alimentation 4 et à la ligne de retour 5 respectivement via une première ligne de gavage 35a et une deuxième ligne de gavage 35b.

La première ligne de gavage 35a comprend un premier limiteur de pression 36a et un clapet anti retour 37a montés en parallèle. Le clapet anti-retour 37a est destiné à injecter de l'huile depuis la source de gavage 3 vers la ligne d'alimentation 4. Le premier limiteur de pression 36a est par exemple un limiteur de pression à action directe.

La deuxième ligne de gavage 35b comprend un deuxième limiteur de pression 36b et un clapet anti-retour 37b montés en parallèle. Le clapet anti-retour 37b est destiné à injecter de l'huile depuis la source de gavage 3 vers la ligne de retour 5. Le deuxième limiteur de pression 36b est par exemple un limiteur de pression à action directe.

Les limiteurs de pression d'un circuit en boucle fermée sont des appareils de protection contre les surpressions, qui permettent une sortie de fluide lorsque la pression maximale admissible dans une ligne d'alimentation ou de retour est atteinte. Cette pression maximale peut être atteinte par exemple en cas de blocage de la transmission du côté d'une machine hydraulique ou de l'autre machine. Les limiteurs de pression protègent dans ce cas contre la destruction des composants du circuit hydraulique, par exemple contre l'éclatement des lignes d'alimentation ou de retour, ou la destruction des machines hydrauliques.

On comprendra donc que tant qu'une pression limite de tarage n'est pas atteinte dans la ligne d'alimentation 4 ou la ligne de retour 5, c'est-à-dire lors d'une utilisation normale du système 100, les limiteurs de pression 36a et 36b des lignes de gavage 35a, 35b sont fermés et ne permettent pas de moduler le rapport de vitesses entre l'appareil hydraulique menant 1 et mené 2.

Le système 100 comprend en outre une ligne de dérivation 6 reliée d'une part à la ligne d'alimentation 4 et d'autre part à la ligne de retour 5.

La ligne de dérivation 6 comprend au moins un moyen configuré pour assurer automatiquement un transfert de débit entre la ligne d'alimentation 4 et la ligne de retour 5 afin de moduler un rapport de vitesses de rotation entre l'appareil hydraulique menant 1 et l'appareil hydraulique mené 2. Plus précisément, le moyen permet de moduler un rapport de vitesses de rotation entre l'essieu menant 13 et l'essieu mené 23. Le moyen autorise ainsi une différence de vitesses de rotation entre l'essieu menant 13 et l'essieu mené 23, une telle différence de vitesses n'étant pas permise sans ledit moyen dans la mesure où l'appareil hydraulique menant 1 et l'appareil hydraulique mené 2 sont à cylindrée fixe.

De cette manière, lorsque l'appareil hydraulique menant 1 suralimente l'appareil hydraulique mené 2 ou l'inverse, le moyen permet de créer une fuite entre la ligne d'alimentation 4 et la ligne de retour 5, limitant ainsi le couple transmis à l'essieu mené 23 ou à l'essieu menant 13 et l'augmentation de la pression dans la ligne d'alimentation 4 ou dans la ligne de retour 5.

En particulier, dans l'exemple illustré à la figure 1, la ligne de dérivation 6 comprend une restriction 61 configurée pour assurer automatiquement un transfert de débit entre la ligne d'alimentation 4 et la ligne de retour 5.

Les dimensions de la restriction 61 sont définies de sorte à avoir une fuite suffisante entre la ligne d'alimentation 4 et la ligne de retour 5 pour limiter une éventuelle suralimentation de l'appareil hydraulique mené 2 par l'appareil hydraulique menant 1 ou l'inverse, mais limitée pour ne pas perturber le fonctionnement du système 100, lorsqu'il n'y a pas de suralimentation de l'un ou l'autre des appareils hydrauliques 1 et 2.

La restriction 61 permet d'avoir un débit de fuite entre la ligne d'alimentation 4 et la ligne de retour 5 quelle que soit la pression de l'huile dans ces deux lignes 4, 5. En effet, le différentiel de pression entre la ligne d'alimentation 4 et la ligne de retour 5 est proportionnel au carré du débit d'huile dans la ligne de dérivation 6. Une différence de vitesses est ainsi obtenue dès lors que le véhicule roule.

Selon une variante (non représentée), une électrovalve est en outre montée sur la ligne de dérivation 6, en série avec la restriction 61. L'électrovalve est configurée pour sélectivement autoriser ou non un débit dans la ligne de dérivation 6. Ainsi, le conducteur peut par exemple décider s'il préfère un comportement réactif lorsque le véhicule est en ligne droite, et agressif lorsque le véhicule fait un virage, ou s'il souhaite davantage de contrôle lorsque le véhicule fait un virage. Dans le premier cas, l'électrovalve n'autorisera pas de débit dans la ligne de dérivation 6. Dans le second cas, l'électrovalve autorisera au contraire un débit dans la ligne de dérivation 6.

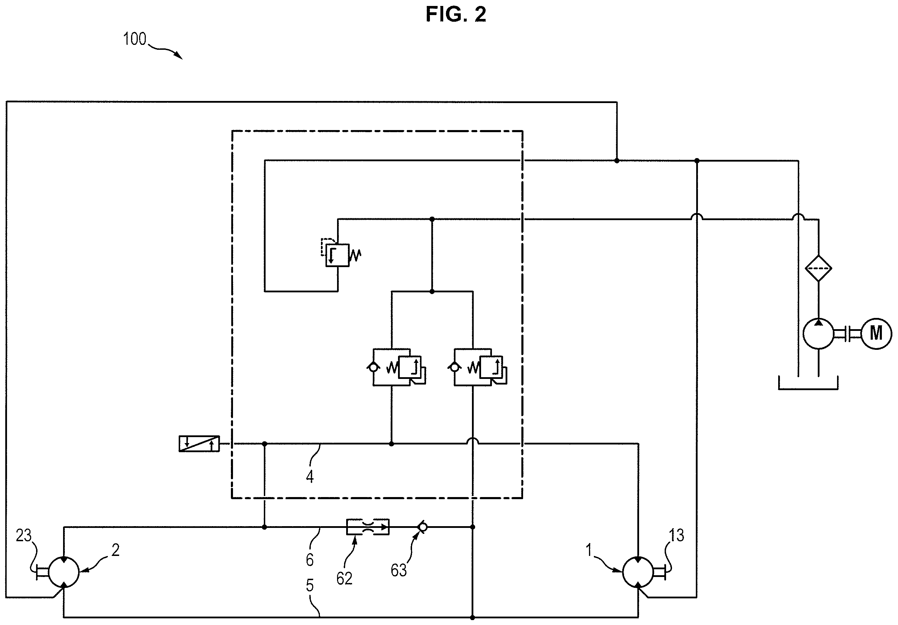

Dans l'exemple illustré à la figure 2, la ligne de dérivation 6 comprend un limiteur de débit 62 configuré pour assurer automatiquement un transfert de débit entre la ligne d'alimentation 4 et la ligne de retour 5.

Le limiteur de débit 62 est unidirectionnel et est par exemple associé en série à un clapet anti-retour 63 destiné à injecter de l'huile depuis la ligne d'alimentation 4 vers la ligne de retour 5. Le clapet anti-retour 63 est de préférence positionné en aval du limiteur de débit 62. Dans ce cas, la ligne de dérivation 6 ne permet de limiter que la suralimentation de l'appareil hydraulique mené 2 par l'appareil hydraulique menant 1. Cela correspond par exemple au cas où le véhicule effectue un virage en marche avant. Selon une variante (non représentée), le limiteur de débit 62 est bidirectionnel et permet de transférer un débit depuis la ligne d'alimentation 4 vers la ligne de retour 5, et depuis la ligne de retour 5 vers la ligne d'alimentation 4.

Le limiteur de débit 62 permet de régler un débit entre la ligne d'alimentation 4 et la ligne de retour 5. Le limiteur de débit 62 est par exemple piloté hydrauliquement. Le limiteur de débit 62 a un comportement linéaire : l'augmentation du débit d'huile que le limiteur de débit 62 laisse passer entre la ligne d'alimentation 4 et la ligne de retour 5 est proportionnel à l'augmentation de la différence de vitesses de rotation entre l'essieu menant 13 et l'essieu mené 23 jusqu'à un seuil prédéterminé de débit entre la ligne d'alimentation 4 et la ligne de retour 5 au-delà duquel le débit de fuite autorisé par le limiteur de débit 62 reste constant. Le seuil prédéterminé de débit correspond à un débit au-delà duquel la différence de vitesses de rotation entre l'essieu menant 13 et l'essieu mené 23 ne peut être due qu'à une perte d'adhérence des roues du véhicule.

Ainsi, en cas de suralimentation de l'appareil hydraulique mené 2 par l'appareil hydraulique menant 1 ou l'inverse, le limiteur de débit 62 autorise un débit plus important entre la ligne d'alimentation 4 et la ligne de retour 5, tant que cette suralimentation peut également être due à un virage du véhicule. Lorsqu'il n'y a pas de suralimentation de l'un ou l'autre des appareils hydrauliques 1 et 2, le limiteur de débit 62 autorise un débit plus faible voire nul.

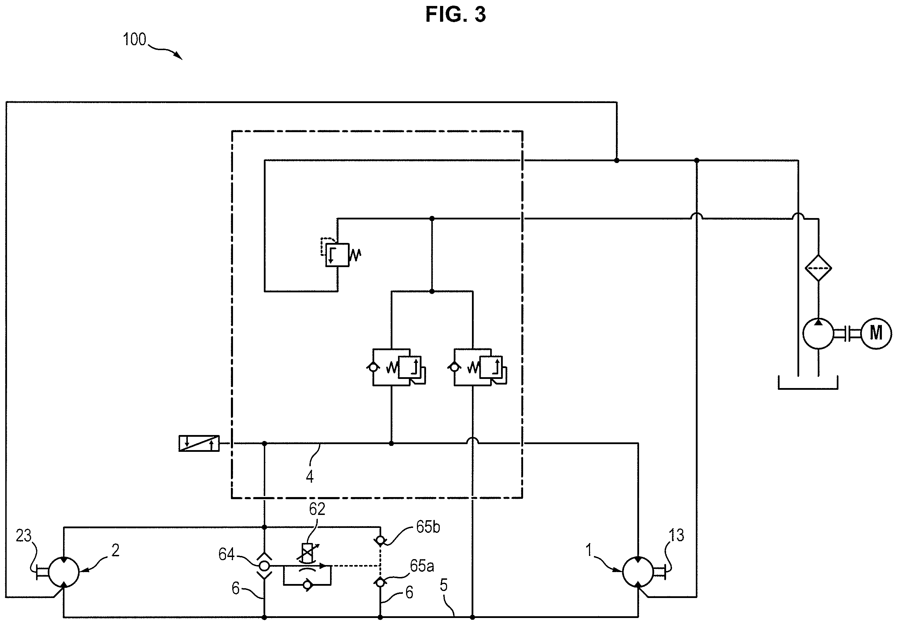

Dans l'exemple illustré à la figure 3, la ligne de dérivation 6 est reliée, en amont du limiteur de débit 62, à la ligne d'alimentation 4 et à la ligne de retour 5 via un sélecteur 64 configuré pour sélectivement injecter de l'huile vers le limiteur de débit 62 depuis la ligne d'alimentation 4 et depuis la ligne de retour 5. Plus précisément, le sélecteur 64 est configuré pour injecter de l'huile vers le limiteur de débit 62 depuis la ligne 4 ou 5 le long de laquelle l'huile est à la pression la plus élevée.

En sortie du limiteur de débit 62, la ligne de dérivation 6 est reliée d'une part à la ligne d'alimentation 4 et d'autre part à la ligne de retour 5. De préférence, la ligne de dérivation 6 est reliée en sortie du limiteur de débit 62 d'une part à la ligne de retour 5 et d'autre part à la ligne d'alimentation 4 via des clapets anti-retour 65a et 65b respectivement destinés à injecter de l'huile depuis le limiteur de débit 62 vers la ligne de retour 5 et la ligne d'alimentation 4.

Le limiteur de débit 62 est par exemple unidirectionnel. Pour cela il est par exemple associé à un clapet anti-retour monté en parallèle.

Selon une variante (non représentée), le limiteur de débit 62, le sélecteur 64, et les clapets anti-retour 65a, 65b forment ensemble un seul élément bidirectionnel.

Le limiteur de débit 62 permet ainsi de régler un débit depuis la ligne d'alimentation 4 vers la ligne de retour 5, lorsque c'est la ligne d'alimentation 4 qui présente la pression la plus élevée, et de régler un débit depuis la ligne de retour 5 vers la ligne d'alimentation 4, lorsque c'est la ligne de retour 5 qui présente la pression la plus élevée. Dans cet exemple, le limiteur de débit 62 fonctionne que le véhicule soit en marche avant ou en marche arrière.

Le limiteur de débit 62 est par exemple piloté électriquement par l'intermédiaire d'un dispositif de commande (non représenté). Le dispositif de commande est par exemple relié à des mesureurs configurés pour mesurer la vitesse de rotation de chacun des essieux menant 13 et mené 23. En plus, le comportement du système 100 peut en outre être amélioré si le dispositif de commande est relié à la position du volant.

En-deçà d'un seuil prédéterminé de différence de vitesses de rotation, le limiteur de débit 62 a un comportement linéaire : l'augmentation du débit d'huile que le limiteur de débit 62 laisse passer entre la ligne d'alimentation 4 et la ligne de retour 5 est proportionnel à l'augmentation de la différence de vitesses de rotation entre l'essieu menant 13 et l'essieu mené 23. Au-delà du seuil prédéterminé de différence de vitesses de rotation, le débit de fuite autorisé par le limiteur de débit 62 reste constant. Le seuil prédéterminé de différence de vitesses de rotation correspond à une différence de vitesses de rotation entre les essieux menant 13 et mené 23 au-delà de laquelle cette différence de vitesse ne peut être due qu'à une perte d'adhérence des roues du véhicule.

Ainsi, en cas de suralimentation de l'appareil hydraulique mené 2 par l'appareil hydraulique menant 1 ou l'inverse, le limiteur de débit 62 autorise un débit plus important entre la ligne d'alimentation 4 et la ligne de retour 5, tant que cette suralimentation peut également être due à un virage du véhicule. Lorsqu'il n'y a pas de suralimentation de l'un ou l'autre des appareils hydrauliques 1 et 2, le limiteur de débit 62 autorise un débit plus faible voire nul.

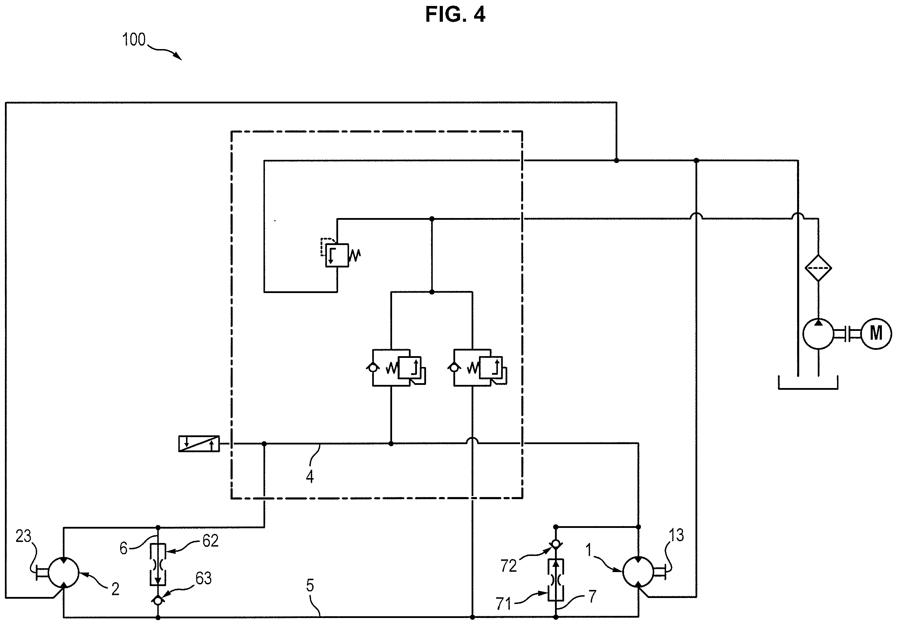

Dans l'exemple illustré à la figure 4, le système 100 comprend une première ligne de dérivation 6 et une deuxième ligne de dérivation 7 chacune reliées d'une part à la ligne d'alimentation 4 et d'autre part à la ligne de retour 5.

La première ligne de dérivation 6 comprend un premier limiteur de débit 62 configuré pour assurer automatiquement un transfert de débit entre la ligne d'alimentation 4 et la ligne de retour 5. Le premier limiteur de débit 62 est par exemple unidirectionnel et associé en série à un clapet anti-retour 63 destiné à injecter de l'huile depuis la ligne d'alimentation 4 vers la ligne de retour 5. Le clapet anti-retour 63 est de préférence positionné en aval du premier limiteur de débit 62.

La deuxième ligne de dérivation 7 comprend un deuxième limiteur de débit 71 configuré pour assurer automatiquement un transfert de débit entre la ligne d'alimentation 4 et la ligne de retour 5. Le deuxième limiteur de débit 71 est par exemple unidirectionnel et associé en série à un clapet anti-retour 72 destiné à injecter de l'huile depuis la ligne de retour 5 vers la ligne d'alimentation 4. Le clapet anti-retour 72 est de préférence positionné en aval du deuxième limiteur de débit 71.

Selon une variante (non représentée), les premier et deuxième limiteurs de débit 62, 71 et les clapets anti-retour 63, 72 qui leur sont associés forment ensemble un seul élément bidirectionnel.

Les premier et deuxième limiteurs de débit 62 et 71 permettent respectivement de régler un débit depuis la ligne d'alimentation 4 vers la ligne de retour 5 et depuis la ligne de retour 5 vers la ligne d'alimentation 4.

Les premier et deuxième limiteurs de débit 62 et 71 sont pilotés séparément par l'intermédiaire d'un dispositif de commande (non représenté). Le dispositif de commande est par exemple relié à des mesureurs configurés pour mesurer la vitesse de rotation de chacun des essieux menant 13 et mené 23.

En-deçà d'un premier seuil prédéterminé de différence de vitesses de rotation, le premier limiteur de débit 62 a un comportement linéaire : l'augmentation du débit d'huile que le premier limiteur de débit 62 laisse passer entre la ligne d'alimentation 4 et la ligne de retour 5 est proportionnel à l'augmentation de la différence de vitesses de rotation entre l'essieu menant 13 et l'essieu mené 23. Au-delà du premier seuil prédéterminé de différence de vitesses de rotation, le débit de fuite autorisé par le premier limiteur de débit 62 reste constant. Le premier seuil prédéterminé de différence de vitesses de rotation correspond à une différence de vitesses de rotation entre les essieux menant 13 et mené 23 au-delà de laquelle cette différence de vitesse ne peut être due qu'à une perte d'adhérence des roues du véhicule. Le premier limiteur de débit 62 sera par exemple activé en cas de marche avant du véhicule.

En-deçà d'un deuxième seuil prédéterminé de différence de vitesses de rotation, le deuxième limiteur de débit 71 a un comportement linéaire : l'augmentation du débit d'huile que le deuxième limiteur de débit 71 laisse passer entre la ligne de retour 5 et la ligne d'alimentation 4 est proportionnel à l'augmentation de la différence de vitesses de rotation entre l'essieu mené 23 et l'essieu menant 13. Au-delà du deuxième seuil prédéterminé de différence de vitesses de rotation, le débit de fuite autorisé par le deuxième limiteur de débit 71 reste constant. Le deuxième seuil prédéterminé de différence de vitesses de rotation correspond à une différence de vitesses de rotation entre les essieux mené 23 et menant 13 au-delà de laquelle cette différence de vitesse ne peut être due qu'à une perte d'adhérence des roues du véhicule. Le deuxième limiteur de débit 71 sera par exemple activé en cas de marche arrière du véhicule.

Ainsi, en cas de suralimentation de l'appareil hydraulique mené 2 et tant que la différence de vitesse entre les essieux 13 et 23 peut être due à un virage, le premier limiteur de débit 62 autorise un débit plus important entre la ligne d'alimentation 4 et la ligne de retour 5, tandis que le deuxième limiteur de débit 71 autorise un débit faible voire nul entre la ligne de retour 5 et la ligne d'alimentation 4. En cas de suralimentation de l'appareil hydraulique menant 1 et tant que la différence de vitesse entre les essieux 13 et 23 peut être due à un virage, le deuxième limiteur de débit 71 autorise un débit plus important entre la ligne de retour 5 et la ligne d'alimentation 4, tandis que le premier limiteur de débit 62 autorise un débit faible voire nul entre la ligne d'alimentation 4 et la ligne de retour 5. Enfin, lorsqu'aucun des appareils hydrauliques 1 et 2 n'est suralimenté, les premier et deuxième limiteurs de débit 62 et 71 autorisent un débit faible voire nul entre la ligne d'alimentation 4 et la ligne de retour 5.

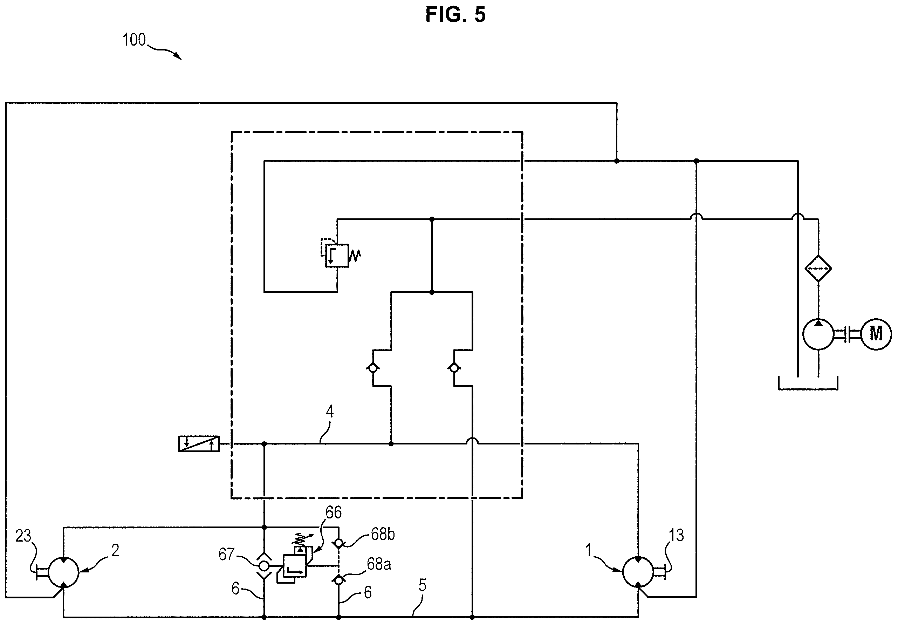

Selon une variante illustrée à la figure 5, la ligne de dérivation 6 comprend un limiteur de pression 66 configuré pour assurer automatiquement un transfert de débit entre la ligne d'alimentation 4 et la ligne de retour 5.

La ligne de dérivation 6 est reliée en amont du limiteur de pression 66 à la ligne d'alimentation 4 et à la ligne de retour 5 via un sélecteur 67 configuré pour sélectivement injecter de l'huile vers le limiteur de pression 66 depuis la ligne d'alimentation 4 et depuis la ligne de retour 5. Plus précisément, le sélecteur 67 est configuré pour injecter de l'huile vers le limiteur de pression 66 depuis la ligne 4 ou 5 le long de laquelle l'huile est à la pression la plus élevée.

En sortie du limiteur de pression 66, la ligne de dérivation 6 est reliée d'une part à la ligne d'alimentation 4 et d'autre part à la ligne de retour 5. De préférence, la ligne de dérivation 6 est reliée en sortie du limiteur de pression 66 d'une part à la ligne de retour 5 et d'autre part à la ligne d'alimentation 4 via des clapets anti-retour 68a et 68b respectivement destinés à injecter de l'huile depuis le limiteur de pression 66 vers la ligne de retour 5 et la ligne d'alimentation 4.

Selon une variante (non représentée), le limiteur de pression 66, le sélecteur 67, et les clapets anti-retour 68a, 68b forment ensemble un seul élément bidirectionnel.

En cas de suralimentation de l'appareil hydraulique mené 2 par l'appareil hydraulique menant 1 ou l'inverse, lorsque la pression dans la ligne d'alimentation 4 ou la ligne de retour 5 atteint un seuil prédéterminé de pression, le limiteur de pression 66 autorise un débit entre la ligne d'alimentation 4 et la ligne de retour 5. Lorsqu'aucun des appareils hydrauliques 1 et 2 n'est suralimenté, le limiteur de pression 66 n'autorise aucun débit entre la ligne d'alimentation 4 et la ligne de retour 5.

De préférence, le limiteur de pression 66 est un limiteur de pression à action pilotée. Le limiteur de pression 66 est alors piloté par l'intermédiaire d'un dispositif de commande (non représenté). Le dispositif de commande est par exemple relié à des mesureurs configurés pour mesurer la vitesse de rotation de chacun des essieux menant 13 et mené 23. Ainsi, lorsque le dispositif de commande détecte une différence de vitesse de rotation entre les essieux 13 et 23, il commande le limiteur de pression 66 d'autoriser un débit entre la ligne d'alimentation 4 et la ligne de retour 5.

Dans l'exemple illustré à la figure 5, les limiteurs de pression 36a et 36b des lignes de gavage 35a et 35b ont avantageusement été supprimés. Cela a pour avantage particulier de limiter les bruits dus à la vibration des tuyaux sous pression.

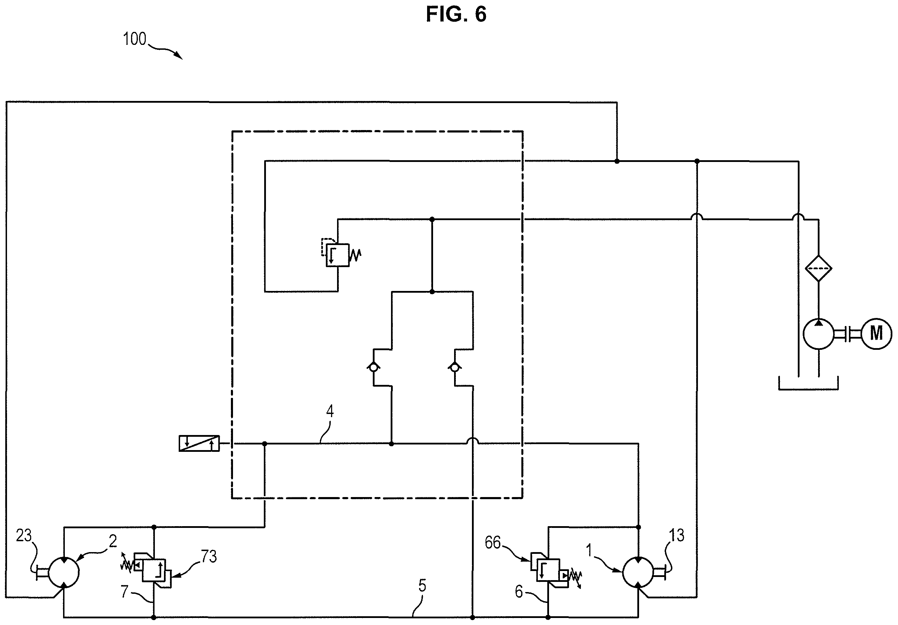

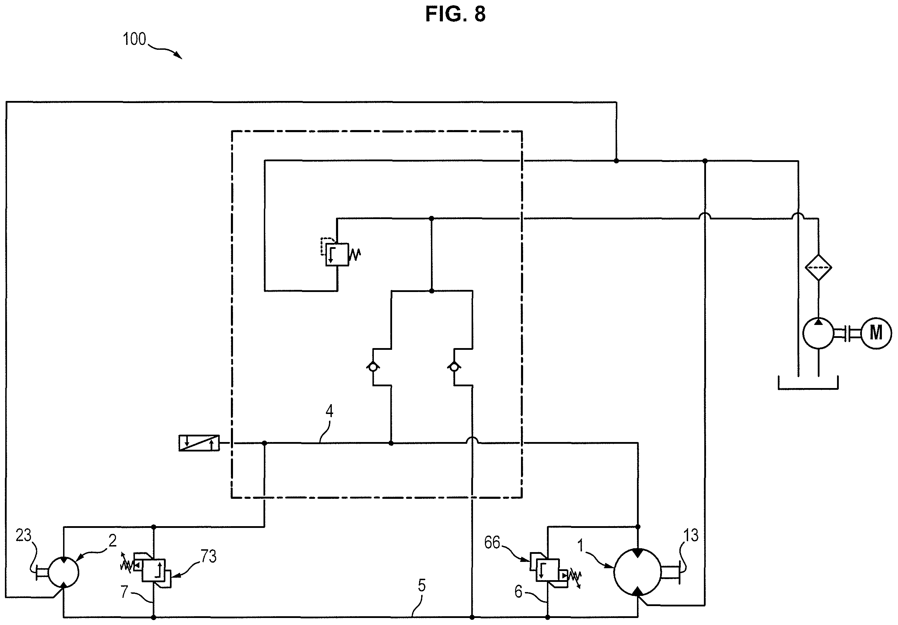

Dans les exemples illustrés aux figures 6 et 8, le système 100 comprend une première ligne de dérivation 6 et une deuxième ligne de dérivation 7 chacune reliées d'une part à la ligne d'alimentation 4 et d'autre part à la ligne de retour 5.

La première ligne de dérivation 6 comprend un premier limiteur de pression 66 configuré pour assurer un transfert de débit depuis la ligne d'alimentation 4 vers la ligne de retour 5.

La deuxième ligne de dérivation 7 comprend un deuxième limiteur de pression 73 configuré pour assurer un transfert de débit depuis la ligne de retour 5 vers la ligne d'alimentation 4.

Selon une variante (non représentée), les premier et deuxième limiteurs de pression 66, 73 forment ensemble un seul élément bidirectionnel.

En cas de suralimentation de l'appareil hydraulique mené 2 par l'appareil hydraulique menant 1 ou l'inverse, lorsque la pression dans la ligne d'alimentation 4 ou la ligne de retour 5 atteint un seuil prédéterminé de pression, le premier limiteur de pression 66 ou le deuxième limiteur de pression 73 autorise un débit entre la ligne d'alimentation 4 et la ligne de retour 5. Lorsqu'aucun des appareils hydrauliques 1 et 2 n'est suralimenté, les premier et deuxième limiteurs de pression 66 et 73 n'autorisent aucun débit entre la ligne d'alimentation 4 et la ligne de retour 5.

De préférence, les premier et deuxième limiteurs de pression 66 et 73 sont des limiteurs de pression à action pilotée. Ces limiteurs de pression 66, 73 sont à tarage variable, c'est-à-dire qu'un dispositif de commande modifie le tarage du limiteur. Sur les figures 6 et 8, des moyens de tarage électriques sont représentés à titre d'exemple. Une flèche sur le moyen de tarage indique que ce tarage est variable. Le dispositif de commande du tarage n'est pas représenté. Avantageusement, ces limiteurs 66, 73 sont du type proportionnel. Les premier et deuxième limiteurs de pression 66 et 73 sont pilotés séparément par l'intermédiaire du dispositif de commande. Le dispositif de commande est par exemple relié à des mesureurs configurés pour mesurer la vitesse de rotation de chacun des essieux menant 13 et mené 23. Ainsi, lorsque le dispositif de commande détecte une différence de vitesse de rotation entre les essieux 13 et 23, il commande le premier limiteur de pression 66 ou le deuxième limiteur de pression 73 d'autoriser un débit entre la ligne d'alimentation 4 et la ligne de retour 5.

Dans les exemples illustrés aux figures 6 et 8, les limiteurs de pression 36a et 36b des lignes de gavage 35a et 35b ont avantageusement été supprimés. Cela a pour avantage particulier de limiter les bruits dus à la vibration des tuyaux sous pression.

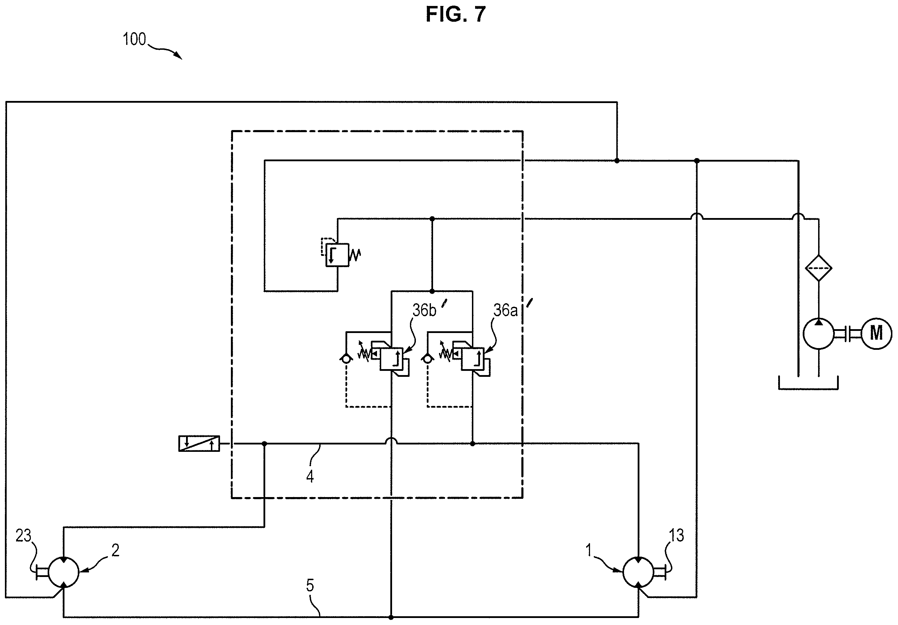

Dans l'exemple illustré à la figure 7, les limiteurs de pression 36a et 36b des lignes de gavage 35a et 35b sont remplacés par des limiteurs de pression à action pilotée 36a' et 36b'. Ces limiteurs de pression 36a', 36b' sont à tarage variable, c'est-à-dire qu'un dispositif de commande modifie le tarage du limiteur. Sur la figure 7, des moyens de tarage électriques sont représentés à titre d'exemple. Une flèche sur le moyen de tarage indique que ce tarage est variable. Le dispositif de commande du tarage n'est pas représenté. Avantageusement, ces limiteurs 36a', 36b' sont du type proportionnel. Dans ce cas, il est possible de piloter le tarage de l'un des deux limiteurs 36a' ou 36b' de manière à créer un débit de fuite contrôlé.

Le premier limiteur de pression à action pilotée 36a' de la première ligne de gavage 35a est configuré pour assurer automatiquement un transfert de débit entre la ligne d'alimentation 4 et la source de gavage 3.

Le deuxième limiteur de pression à action pilotée 36b' de la deuxième ligne de gavage 35b est configuré pour assurer un transfert de débit entre la ligne de retour 5 et la source de gavage 3.

Les premier et deuxième limiteurs de pression 36a' et 36b' sont alors pilotés séparément par l'intermédiaire d'un dispositif de commande (non représenté). Le dispositif de commande est par exemple relié à des mesureurs configurés pour mesurer la vitesse de rotation de chacun des essieux menant 13 et mené 23. Ainsi, lorsque le dispositif de commande détecte une différence de vitesse de rotation entre les essieux 13 et 23, il commande le premier limiteur de pression 36a' ou le deuxième limiteur de pression 36b' d'autoriser un débit entre la ligne d'alimentation 4 ou la ligne de retour 5 et la source de gavage 3. Dans ce cas, l'huile transmise à la source de gavage 3 est réinjectée dans la ligne d'alimentation 4 ou la ligne de retour 5 via les clapets anti-retour 37a ou 37b qui sont montés en parallèle des limiteurs de pression 36a' et 36b'. Le débit peut être contrôlé par exemple, par des moyens électriques, à partir d'un dispositif de commande non représenté, relié au moyen de tarage variable des limiteurs de pression 36a' et 36b'. Un autre moyen de pilotage, par exemple ayant une interface hydraulique à basse pression comme intermédiaire est possible. Connaissant une information de pression dans l'une des lignes 4, 5, ou une information de vitesse des roues, ou éventuellement de ces deux informations, il est possible, soit à partir d'une loi pression débit, soit par un système à rétroaction en boucle fermée, de créer le débit de fuite nécessaire pour réaliser le ratio de vitesse souhaité entre les roues.

Le dispositif de commande active le premier ou le deuxième limiteur de pression 36a' ou 36b' en fonction du sens de rotation des essieux 13, 23. Le premier limiteur de pression 36a' sera par exemple activé lorsque le véhicule est en marche avant, tandis que le deuxième limiteur de pression 36b' sera activé lorsque le véhicule est en marche arrière.

On comprendra que dans tous les exemples illustrés aux figures 1 à 8, le moyen 61, 62, 66, 71, 73 permet de créer un débit de fuite entre la ligne d'alimentation 4 et la ligne de retour 5 sans qu'il soit nécessaire de se placer dans des conditions de fonctionnement aux limites du système 100. En particulier, le moyen 61, 62, 66, 71, 73 permet de créer un débit de fuite entre la ligne d'alimentation 4 et la ligne de retour 5 même lorsque la pression de l'huile dans ces deux lignes 4, 5 est faible comparativement par exemple à la pression limite de tarage utilisée pour les limiteurs de pression 36a, 36b. En d'autres termes, le moyen 61, 62, 66, 71, 73 permet de créer un débit de fuite même lorsque le système 100 fonctionne normalement.

On comprendra que dans les exemples illustrés aux figures 5 à 8, l'utilisation de limiteurs de pression pilotés, à tarage variable, permet de modifier le ratio de vitesses entre les appareils hydrauliques menant et menés 1, 2 à tout moment, y compris en situation dynamique de roulage, et de manière instantanée. Il est donc possible de les utiliser pour modifier le comportement d'un véhicule à la demande, en fonction des situations de roulage et d'adhérence qui se présentent, par exemple à partir de lois de pilotages préétablies enregistrées dans un calculateur ou ECU (Electronic Control Unit) non représenté, utilisé comme moyen de commande.

Dans les exemples illustrés aux figures 1 à 7, les appareils hydrauliques 1 et 2 sont de même cylindrée. Dans ce cas, lorsque les roues patinent, le véhicule se comporte en 4x4, tandis que le reste du temps le véhicule se comporte en 4x2. C'est-à-dire que tant qu'il n'y a pas de patinage des roues entrainées mécaniquement, les roues entrainées hydrauliquement sont essentiellement suiveuses et ne procurent aucun effet de motricité. Uniquement lorsqu'un patinage des roues entrainées mécaniquement se produit, les roues entrainées hydrauliquement vont fournir du couple et procurent ainsi un effet de motricité. L'utilisateur peut sentir un transfert de puissance d'un essieu sur l'autre, et l'équilibre dynamique du véhicule est modifié.

Cependant, l'invention s'applique également au cas où l'appareil hydraulique menant 1 a une plus grosse cylindrée que l'appareil hydraulique mené 2 comme illustré à la figure 8. Dans ce cas, le véhicule se comporte tout le temps en 4x4 et le système 100 est donc réactif. En d'autres termes, les roues entrainées hydrauliquement peuvent fournir un couple même lorsqu'il n'y a aucun patinage de l'essieu entrainé mécaniquement, ce qui procure un effet de motricité. L'utilisateur peut sentir un transfert de puissance d'un essieu sur l'autre, et l'équilibre dynamique du véhicule est modifié. En pilotant les limiteurs de pression électriquement (les limiteurs de pression pouvant être de type proportionnels), voir par exemple figure 8, il est possible de jouer en permanence sur la répartition de couple entre l'avant et l'arrière du véhicule, et de modifier l'effet de motricité souhaité. Par exemple, si l'on souhaite un véhicule qui aura tendance à être plus vif en virage, c'est-à-dire qui a tendance à engager le virage, ou à être survireur en accélération, il est possible de mettre davantage de couple sur l'essieu arrière du véhicule. A l'opposé, si l'on souhaite un effet stabilisateur, c'est-à-dire un effet sous vireur, il faut diminuer le couple sur l'essieu arrière, et si possible le rendre négatif.

On peut également envisager de placer davantage de couple en entrée de virage pour forcer le véhicule à engager le virage, et ensuite diminuer le couple en sortie de virage pour obtenir un effet stabilisateur.

On peut également souhaiter piloter le couple par essieu de manière variable, par exemple en fonction de l'accélération, ou de la puissance demandée au véhicule. Par exemple, il est agréable d'avoir une répartition de couple de 70% sur l'avant et 30 % sur l'arrière d'un véhicule en forte accélération, tandis qu'on aime avoir plus de couple sur l'essieu arrière en décélération. Cette répartition peut varier progressivement, par exemple linéairement, en fonction de paramètres donnés par le contrôle moteur, et représentatifs de la puissance demandée en accélération ou en décélération.

Globalement, pour un effet stabilisateur et sécurisant, on a intérêt à transmettre davantage de couple à l'avant en accélération, et davantage de couple à l'arrière en décélération. On obtient l'inverse, c'est-à-dire un effet de vivacité en inversant cette règle. On peut à tout moment modifier le comportement d'un véhicule en utilisant ce procédé, y compris en couplant le pilotage avec des informations données par les systèmes esp ou abs.
On peut également piloter le couple par essieu en fonction de paramètres d'adhérence prédéfinis. Par exemple en connaissant le couple maximal qu'il est possible de faire passer entre une roue entrainée mécaniquement et le sol sans patinage, y compris sur temps sec, il est possible de transférer du couple sur l'autre essieu, et donc d'utiliser une puissance supérieure sur la transmission, ce qui procure une accélération supérieure à celle du même véhicule deux roues motrices sans assistance hydraulique.

Le fait d'avoir des cylindrées différentes et le système de limiteurs de pression de l'invention permet donc de gérer activement le couple entre l'avant et l'arrière d'un véhicule à tout moment, en ligne droite comme en virage, en accélération comme en décélération, pour obtenir un effet sous vireur ou survireur, ou un effet de vivacité ou de stabilité sur la trajectoire du véhicule, et également de transmettre une puissance supérieure à la liaison au sol du véhicule.

Les transmissions hydrauliques selon l'invention ont vocation à être utilisées sur une plage de vitesses limitée. En conséquence, pour éviter les à-coups de couple nuisibles au contrôle du véhicule, les effets survireurs ou sous vireurs doivent être lissés pour apparaitre avec progressivité au moment de l'engagement ou du désengagement de l'assistance, ce qui revient à limiter ou augmenter le débit dans le système de l'invention avec progressivité. Les modes de réalisation de l'invention illustrés aux figures 1 à 5 et 7 sont également applicables au cas où l'appareil hydraulique menant 1 a une plus grosse cylindrée que l'appareil hydraulique mené 2.

Selon une variante (non représentée), le système 100 comporte deux appareils hydrauliques menés reliés entre eux par l'intermédiaire d'un diviseur de débit configuré pour répartir le débit entre les deux appareils hydrauliques. Les appareils hydrauliques menés sont par exemple montés à l'arrière du véhicule et sont respectivement reliés à la roue arrière gauche arrière droite du véhicule. Dans ce cas, il est non seulement possible de gérer une répartition du couple entre les roues avant et arrière du véhicule, mais aussi entre les roues arrière gauche et droite.

## Revendications

1. Véhicule comprenant un châssis, un essieu menant (13) et un essieu mené (23) liés chacun à des roues, et un moteur primaire (M) entrainant en rotation ledit essieu menant qui comprend un système (100) comprenant :
- un appareil hydraulique menant (1) présentant un orifice d'admission (11) et un orifice de refoulement (12),
- un appareil hydraulique mené (2) présentant un orifice d'admission (21) et un orifice de refoulement (22), le refoulement de l'appareil hydraulique menant étant relié à l'admission de l'appareil hydraulique mené par une ligne d'alimentation (4), et le refoulement de l'appareil hydraulique mené étant relié à l'admission de l'appareil hydraulique menant par une ligne de retour (5),
- l'essieu menant (13) et l'essieu mené (23) étant respectivement couplés à l'appareil hydraulique menant (1) et l'appareil hydraulique mené (2) l'appareil hydraulique menant (1) et l'appareil hydraulique mené (2) étant à cylindrée fixe, le système (100) comprenant en outre une ligne de dérivation (6) reliée d'une part à la ligne d'alimentation et d'autre part à la ligne de retour, ladite ligne de dérivation comprenant au moins un moyen (61, 62, 66, 71, 73) configuré pour assurer automatiquement un transfert de débit entre la ligne d'alimentation (4) et la ligne de retour (5), **caractérisé en ce que** le système, afin de moduler un rapport de vitesses de rotation entre l'appareil hydraulique menant et l'appareil hydraulique mené,
comprend une restriction (61) configurée pour assurer automatiquement un transfert de débit entre la ligne d'alimentation (4) et la ligne de retour (5), ou un limiteur de débit (62) configuré pour assurer automatiquement un transfert de débit entre la ligne d'alimentation (4) et la ligne de retour (5), ou au moins un limiteur de pression (66) configuré pour assurer automatiquement un transfert de débit entre la ligne d'alimentation (4) et la ligne de retour (5).

2. Véhicule selon la revendication 1, dans lequel les appareils hydrauliques menant (1) et mené (2) sont respectivement configurés pour tourner à la vitesse de rotation des roues associées à l'essieu menant (13) et à l'essieu mené (23).

3. Véhicule selon la revendication 1 ou 2, dans lequel le système comprend une deuxième ligne de dérivation (7) reliée d'une part à la ligne d'alimentation (4) et d'autre part à la ligne de retour (5) comprenant un deuxième limiteur de débit (71) configuré pour assurer automatiquement un transfert de débit entre la ligne d'alimentation et la ligne de retour.

4. Véhicule selon la revendication 1, 2 ou 3, dans lequel le ou les limiteurs de débit (62, 71) sont chacun associés à un clapet anti-retour (63, 72).

5. Véhicule selon la revendication 1 ou 2, dans lequel la ligne de dérivation (6) comprend un sélecteur (64) configuré pour sélectivement injecter de l'huile vers le limiteur de débit (61) depuis la ligne d'alimentation (4) et depuis la ligne de retour (5), et dans lequel la ligne de dérivation (6) est reliée en sortie du limiteur de débit (62) d'une part à la ligne d'alimentation (4) et d'autre part à la ligne de retour (5).

6. Véhicule selon la revendication 5, dans lequel la ligne de dérivation (6) est reliée en sortie du limiteur de débit (62) d'une part à la ligne d'alimentation (4) et d'autre part à la ligne de retour (5) via des clapets anti-retour (65a, 65b).

7. Véhicule selon la revendication 1 ou 2, dans lequel le système comprend :
- une première ligne de dérivation (6) reliée d'une part à la ligne d'alimentation (4) et d'autre part à la ligne de retour (5) comprenant un premier limiteur de pression (66) configuré pour assurer automatiquement un transfert de débit depuis la ligne d'alimentation vers la ligne de retour,
- une deuxième ligne de dérivation (7) reliée d'une part à la ligne d'alimentation (4) et d'autre part à la ligne de retour (5) comprenant un deuxième limiteur de pression (73) configuré pour assurer automatiquement un transfert de débit depuis la ligne de retour (5) vers la ligne d'alimentation (4).

8. Véhicule selon la revendication 1 ou 2, dans lequel la ligne de dérivation (6) comprend un sélecteur (67) configuré pour sélectivement injecter de l'huile vers le limiteur de pression (66) depuis la ligne d'alimentation (4) et depuis la ligne de retour (5), et dans lequel la ligne de dérivation (6) est reliée en sortie du limiteur de pression (66) d'une part à la ligne d'alimentation (4) et d'autre part à la ligne de retour (5).

9. Véhicule selon la revendication 8, dans lequel la ligne de dérivation (6) est reliée en sortie du limiteur de pression (66) d'une part à la ligne d'alimentation (4) et d'autre part à la ligne de retour (5) via des clapets anti-retour (68a, 68b).

10. Véhicule selon l'une quelconque des revendications 1, 2, 7, 8 ou 9, dans lequel le ou les limiteurs de pression (66, 73) sont des limiteurs de pression à action pilotée.

11. Véhicule selon la revendication 1 ou 2, dans lequel le système comprend une source de gavage (3) configurée pour délivrer un débit, ladite source de gavage étant d'une part reliée à la ligne d'alimentation (4) via une première ligne de gavage (35a), et d'autre part reliée à la ligne de retour (5) via une deuxième ligne de gavage (35b),
la première ligne de gavage (35a) comprenant un premier limiteur de pression à action pilotée (36a') configuré pour assurer automatiquement un transfert de débit depuis la ligne d'alimentation (4) vers la source de gavage (3),
la deuxième ligne de gavage (35b) étant munie d'un deuxième limiteur de pression à action pilotée (36b') configuré pour assurer automatiquement un transfert de débit depuis la ligne de retour (5) vers la source de gavage (3).

12. Véhicule selon l'une quelconque des revendications précédentes, dans lequel l'appareil hydraulique menant (1) et l'appareil hydraulique mené (2) sont de même cylindrée.

13. Véhicule selon l'une quelconque des revendications 1 à 11, dans lequel l'appareil hydraulique menant (1) est de plus grosse cylindrée que l'appareil hydraulique mené (2).

14. Procédé d'assistance hydraulique d'un véhicule selon l'une quelconque des revendications 1 à 13 mettant en oeuvre un système (100) comprenant un appareil hydraulique menant (1) présentant un orifice d'admission (11) et un orifice de refoulement (12), et un appareil hydraulique mené (2) présentant un orifice d'admission (21) et un orifice de refoulement (22), le refoulement de l'appareil hydraulique menant étant relié à l'admission de l'appareil hydraulique mené par une ligne d'alimentation (4), et le refoulement de l'appareil hydraulique mené étant relié à l'admission de l'appareil hydraulique menant par une ligne de retour (5),
le procédé étant **caractérisé par le fait que** les appareils hydrauliques mené et menant (1, 2) sont à cylindrée fixe et en ce qu'il comprend une étape de transfert automatique d'un débit entre la ligne d'alimentation (4) et la ligne de retour (5) par l'intermédiaire d'une ligne de dérivation (6) reliée d'une part à la ligne d'alimentation et d'autre part à la ligne de retour afin de moduler un rapport de vitesses de rotation entre l'appareil hydraulique menant (1) et l'appareil hydraulique mené (2).

## Patentansprüche

1. Fahrzeug, umfassend ein Fahrgestell, eine führende Achse (13) und eine geführte Achse (23), die jeweils mit Rädern verbunden sind, und einen Primär-Motor (M), der die führende Achse in Drehung versetzt, ein System (100) umfassend, das umfasst:
- ein führendes hydraulisches Gerät (1), das eine Einlassöffnung (11) und eine Auslassöffnung (12) aufweist,
- ein geführtes hydraulisches Gerät (2), das eine Einlassöffnung (21) und eine Auslassöffnung (22) aufweist, wobei der Auslass des führenden hydraulischen Geräts durch eine Versorgungsleitung (4) mit dem Einlass des geführten hydraulischen Geräts verbunden ist, und der Auslass des geführten hydraulischen Geräts durch eine Rückführleitung (5) mit dem Einlass des führenden hydraulischen Geräts verbunden ist,
- wobei die führende Achse (13) und die geführte Achse (23) jeweils mit dem führenden hydraulischen Gerät (1) und dem geführten hydraulischen Gerät (2) gekoppelt sind
wobei das führende hydraulische Gerät (1) und das geführte hydraulische Gerät (2) mit einem konstanten Hubraum sind, wobei das System (100) weiter eine Umgehungsleitung (6) umfasst, die einerseits mit der Versorgungsleitung und andererseits mit der Rückführleitung verbunden ist, wobei die Umgehungsleitung mindestens ein Mittel (61, 62, 66, 71, 73) umfasst, das konfiguriert ist, um automatisch für einen Durchsatztransfer zwischen der Versorgungsleitung (4) und der Rückführleitung (5) zu sorgen, **dadurch gekennzeichnet, dass** das System, um ein Drehgeschwindigkeitsverhältnis zwischen dem führenden hydraulischen Gerät und dem geführten hydraulischen Gerät zu modulieren, eine Einengung (61) umfasst, umfasst, die konfiguriert ist, um automatisch für einen Durchsatztransfer zwischen der Versorgungsleitung (4) und der Rückführleitung (5) zu sorgen, oder einen Durchsatzbegrenzer (62), konfiguriert, um automatisch für einen Durchsatztransfer zwischen der Versorgungsleitung (4) und der Rückführleitung (5) zu sorgen, oder mindestens einen Druckbegrenzer (66), konfiguriert, um automatisch für einen Durchsatztransfer zwischen der Versorgungsleitung (4) und der Rückführleitung (5) zu sorgen.

2. Fahrzeug nach Anspruch 1, wobei das führende (1) und geführte (2) hydraulische Gerät jeweils konfiguriert sind, um mit der Drehgeschwindigkeit Räder zu drehen, die der führenden Achse (13) und der geführten Achse (23) zugewiesen sind.

3. Fahrzeug nach Anspruch 1 oder 2, wobei das System eine zweite Umgehungsleitung (7) umfasst, die einerseits mit der Versorgungsleitung (4) und andererseits mit der Rückführleitung (5) verbunden ist, umfassend einen zweiten Durchsatzbegrenzer (71), konfiguriert, um automatisch für einen Durchsatztransfer zwischen der Versorgungsleitung und der Rückführleitung zu sorgen.

4. Fahrzeug nach Anspruch 1, 2 oder 3, wobei der oder die Durchsatzbegrenzer (62, 71) jeweils einem Rückschlagventil (63, 72) zugewiesen sind.

5. Fahrzeug nach Anspruch 1 oder 2, wobei die Umgehungsleitung (6) einen Selektor (64) umfasst, konfiguriert, um selektiv Öl zum Durchsatzbegrenzer (61) aus der Versorgungsleitung (4) und aus der Rückführleitung (5) zu injizieren, und wobei die Umgehungsleitung (6) am Ausgang des Durchsatzbegrenzers (62) einerseits mit der Versorgungsleitung (4) und andererseits mit der Rückführleitung (5) verbunden ist.

6. Fahrzeug nach Anspruch 5, wobei die Umgehungsleitung (6) am Ausgang des Durchsatzbegrenzers (62) einerseits mit der Versorgungsleitung (4) und andererseits mit der Rückführleitung (5) über Rückschlagventile (65a, 65b) verbunden ist.

7. Fahrzeug nach Anspruch 1 oder 2, wobei das System umfasst:
- eine erste Umgehungsleitung (6), die einerseits mit der Versorgungsleitung (4) und andererseits mit der Rückführleitung (5) verbunden ist, umfassend einen ersten Druckbegrenzer (66), konfiguriert, um automatisch für einen Durchsatztransfer aus der Versorgungsleitung zu der Ruckführleitung zu sorgen,
- eine zweite Umgehungsleitung (7), die einerseits mit der Versorgungsleitung (4) und andererseits mit der Rückführleitung (5) verbunden ist, umfassend einen zweiten Druckbegrenzer (73), konfiguriert, um automatisch für einen Durchsatztransfer aus der Ruckführleitung (5) zu der Versorgungsleitung (4) zu sorgen.

8. Fahrzeug nach Anspruch 1 oder 2, wobei die Umgehungsleitung (6) einen Selektor (67) umfasst, konfiguriert, um selektiv Öl zum Druckbegrenzer (66) aus der Versorgungsleitung (4) und aus der Rückführleitung (5) zu injizieren, und wobei die Umgehungsleitung (6) am Ausgang des Druckbegrenzers (66) einerseits mit der Versorgungsleitung (4) und andererseits mit der Rückführleitung (5) verbunden ist.

9. Fahrzeug nach Anspruch 8, wobei die Umgehungsleitung (6) am Ausgang des Druckbegrenzers (66) über Rückschlagventile (68a, 68b) einerseits mit der Versorgungsleitung (4) und andererseits mit der Rückführleitung (5) verbunden ist.

10. Fahrzeug nach einem der Ansprüche 1, 2, 7, 8 oder 9, wobei der oder die Druckbegrenzer (66, 73) Druckbegrenzer mit gesteuerter Aktion sind.

11. Fahrzeug nach Anspruch 1 oder 2, wobei das System eine Speisequelle (3) umfasst, konfiguriert, um einen Durchsatz abzugeben, wobei die Speisequelle einerseits über eine erste Speiseleitung (35a) mit der Versorgungsleitung (4) verbunden ist, und andererseits über eine zweite Speiseleitung (35b) mit der Rückführleitung (5) verbunden ist,
wobei die erste Speiseleitung (35a) einen ersten Druckbegrenzer mit gesteuerter Aktion (36a') umfasst, konfiguriert, um automatisch für einen Durchsatztransfer aus der Versorgungsleitung (4) zu der Speiseleitung (3) zu sorgen,
die zweite Speiseleitung (35b) mit einem zweiten Druckbegrenzer mit gesteuerter Aktion (36b') versehen ist, konfiguriert, um automatisch für einen Durchsatztransfer aus der Rückführleitung (5) zu der Speiseleitung (3) zu sorgen.

12. Fahrzeug nach einem der vorstehenden Ansprüche, wobei das führende hydraulische Gerät (1) und das geführte hydraulische Gerät (2) mit demselben Hubraum sind.

13. Fahrzeug nach einem der Ansprüche 1 bis 11, wobei das führende hydraulische Gerät (1) mit einem größeren Hubraum als das geführte hydraulische Gerät (2) ist.

14. Verfahren zum hydraulischen Boosten eines Fahrzeugs nach einem der Ansprüche 1 bis 13, ein System (100) anwendend, das ein führendes hydraulisches Gerät (1), das eine Einlassöffnung (11) und eine Auslassöffnung (12) aufweist, und ein geführtes hydraulisches Gerät (2), das eine Einlassöffnung (21) und eine Auslassöffnung (22) aufweist, umfasst, wobei der Auslass des führenden hydraulischen Geräts durch eine Versorgungsleitung (4) mit dem Einlass des geführten hydraulischen Geräts verbunden ist, und der Auslass des geführten hydraulischen Geräts durch eine Rückführleitung (5) mit dem Einlass des führenden hydraulischen Geräts verbunden ist,
wobei das Verfahren **dadurch gekennzeichnet ist, dass** das geführte und führende hydraulische Gerät (1, 2) mit einem feststehenden Hubraum sind, und dadurch, dass es einen Schritt zum automatischen Transfer eines Durchsatzes zwischen der Versorgungsleitung (4) und der Rückführleitung (5) durch eine Umgehungsleitung (6) umfasst, die einerseits mit der Versorgungsleitung und andererseits mit der Rückführleitung verbunden ist, um ein Drehgeschwindigkeitsverhältnis zwischen dem führenden hydraulischen Gerät (1) und dem geführten hydraulischen Gerät (2) zu modulieren.

## Claims

1. Vehicle comprising a chassis, a drive axle (13) and a driven axle (23) each linked to wheels, and a primary motor (M) driving in rotation said drive axle which comprises a system (100) comprising:
- a drive hydraulic apparatus (1) having an intake orifice (11) and an outlet orifice (12),
- a driven hydraulic apparatus (2) having an intake orifice (21) and an outlet orifice (22), the outlet of the drive hydraulic apparatus being connected to the intake of the driven hydraulic apparatus by a supply line (4), and the outlet of the driven hydraulic apparatus being connected to the intake of the drive hydraulic apparatus by a return line (5),
- the drive axle (13) and the driven axle (23) being respectively coupled to the drive hydraulic apparatus (1) and the driven hydraulic apparatus (2) the drive hydraulic apparatus (1) and the driven hydraulic apparatus (2) having a fixed displacement, the system (100) further comprising a bypass line (6) connected on the one hand to the supply line and on the other and to the return line, said bypass line comprising at least one means (61, 62, 66, 71, 73) configured to automatically ensure a transfer of flow between the supply line (4) and the return line (5), **characterised in that** the system, in order to modulate a ratio of speeds of rotation between the drive hydraulic apparatus and the driven hydraulic apparatus, comprises a restriction (61) configured to automatically ensure a transfer of flow between the supply line (4) and the return line (5), or a flow limiter (62) configured in order to automatically ensure a transfer of flow between the supply line (4) and the return line (5), or at least one pressure limiter (66) configured to automatically ensure a transfer of flow between the supply line (4) and the return line (5).

2. Vehicle according to claim 1, wherein the drive (1) and driven (2) hydraulic apparatuses are respectively configured to rotate at the speed of rotation of the wheels associated with the drive axle (13) and the driven axle (23).

3. Vehicle according to claim 1 or 2, wherein the system comprises a second bypass line (7) connected on the one hand to the supply line (4) and on the other hand to the return line (5) comprising a second flow limiter (71) configured to automatically ensure a transfer of flow between the supply line and the return line.

4. Vehicle according to claim 1, 2 or 3, wherein the flow limiter(s) (62, 71) are each associated with a check valve (63, 72).

5. Vehicle according to claim 1 or 2, wherein the bypass line (6) comprises a selector (64) configured to selectively inject oil towards the flow limiter (61) from the supply line (4) and from the return line (5), and wherein the bypass line (6) is connected at the outlet of the flow limiter (62) on the one hand to the supply line (4) and on the other hand to the return line (5) .

6. Vehicle according to claim 5, wherein the bypass line (6) is connected at the output of the flow limiter (62) on the one hand to the supply line (4) and on the other hand to the return line (5) via check valves (65a, 65b) .

7. Vehicle according to claim 1 or 2, wherein the system comprises:
- a first bypass line (6) connected on the one hand to the supply line (4) and on the other hand to the return line (5) comprising a first pressure limiter (66) configured to automatically ensure a transfer of flow from the supply line to the return line,
- a second bypass line (7) connected on the one hand to the supply line (4) and on the other hand to the return line (5) comprising a second pressure limiter (73) configured to automatically ensure a transfer of flow from the return line (5) to the supply line (4).

8. Vehicle according to claim 1 or 2, wherein the bypass line (6) comprises a selector (67) configured to selectively inject oil towards the pressure limiter (66) from the supply line (4) and from the return line (5), and wherein the bypass line (6) is connected at the outlet of the pressure limiter (66) on the one hand to the supply line (4) and on the other hand to the return line (5).

9. Vehicle according to claim 8, wherein the bypass line (6) is connected at the outlet of the pressure limiter (66) on the one hand to the supply line (4) and on the other hand to the return line (5) via check valves (68a, 68b).

10. Vehicle according to any one of claims 1, 2, 7, 8 or 9, wherein the pressure limiter(s) (66, 73) are pressure limiters with controlled action.

11. Vehicle according to claim 1 or 2, wherein the system comprises a booster source (3) configured to deliver a flow, said booster source being on the one hand connected to the supply line (4) via a first booster line (35a), and on the other hand connected to the return line (5) via a second booster line (35b),
the first booster line (35a) comprising a first controlled-action pressure limiter (36a') configured to automatically ensure a transfer of flow from the supply line (4) to the booster source (3),
the second booster line (35b) being provided with a second controlled-action pressure limiter (36b') configured to automatically ensure a transfer of flow from the return line (5) to the booster source (3).

12. Vehicle according to any one of the previous claims, wherein the drive hydraulic apparatus (1) and the driven hydraulic apparatus (2) have the same displacement.

13. Vehicle according to any one of claims 1 to 11, wherein the drive hydraulic apparatus (1) has a greater displacement than the driven hydraulic apparatus (2).

14. Method for hydraulic assistance of a vehicle according to any one of claims 1 to 13 implementing a system (100) comprising a drive hydraulic apparatus (1) having an intake orifice (11) and an outlet orifice (12), and a driven hydraulic apparatus (2) having an intake orifice (21) and an outlet orifice (22), the outlet of the drive hydraulic apparatus being connected to the intake of the driven hydraulic apparatus by a supply line (4), and the outlet of the driven hydraulic apparatus being connected to the intake of the drive hydraulic apparatus by a return line (5),
the method being **characterised by** the fact that the driven and drive hydraulic apparatus (1, 2) have a fixed displacement and in that it comprises a step of automatic transfer of a flow between the supply line (4) and the return line (5) via a bypass line (6) connected on the one hand to the supply line and on the other hand to the return line in order to modulate a ratio of speeds of rotation between the drive hydraulic apparatus (1) and the driven hydraulic apparatus (2).
